# EUROPÄISCHE PATENTSCHRIFT

(11) **EP 3 924 075 B1**
(45) Veröffentlichungstag und Bekanntmachung des Hinweises auf die Patenterteilung: **28.02.2024**
(21) Anmeldenummer: 20701553.8
(22) Anmeldetag: 17.01.2020
(51) Int. Cl.: A63G 7/00, A63G 1/00, A63G 3/00

(54) **FAHRGESCHÄFT, SOWIE VERFAHREN ZUM BETREIBEN EINES FAHRGESCHÄFTS**
AMUSEMENT RIDE AND METHOD FOR OPERATING AN AMUSEMENT RIDE
MANÈGE ET PROCÉDÉ POUR FAIRE FONCTIONNER UN MANÈGE

(30) Priorität: 11.02.2019 DE 102019103301; 11.02.2019 CN 201910109888
(43) Veröffentlichungstag der Anmeldung: 22.12.2021
(73) Patentinhaber: Mack Rides IP GmbH & Co. KG, 79183 Waldkirch (DE)
(72) Erfinder: FRIEDBERGER, Andreas, 79183 Waldkirch (DE); FLEIG, Rudolf, 79106 Freiburg (DE); ENDERLE, Jan-Philip, 77723 Gengenbach (DE)
(74) Vertreter: Westphal, Mussgnug & Partner Patentanwälte mbB
(86) Internationale Anmeldenummer: PCT/EP2020/051106
(87) Internationale Veröffentlichungsnummer: WO 2020/164854

(56) Entgegenhaltungen:
- WO-A1-95/27543
- WO-A2-2007/050545
- US-A1- 2009 114 114
- US-A1- 2018 286 144
- US-B2- 9 192 865

## Beschreibung

Die vorliegende Erfindung betrifft ein Fahrgeschäft mit den Merkmalen des Patentanspruchs 1 und ein Verfahren zum Betreiben eines solchen Fahrgeschäfts mit den Merkmalen des Patentanspruchs 14.

Fahrgeschäfte sind aus dem Stand der Technik in unterschiedlichen Ausgestaltungen vorbekannt. Fahrgeschäfte umfassen typischerweise wenigstens ein Fahrzeug, das eingerichtet ist, entlang einer vorgegebenen Bahn zu fahren und eine Mehrzahl von Fahrgästen zu Unterhaltungszwecken zu transportieren. Hierzu können die Fahrzeuge eine Vielzahl von Sitzplätzen aufweisen, auf denen bestimmungsgemäß Fahrgäste für die Fahrt mit dem Fahrgeschäft platznehmen können und durch geeignete Sicherungsmaßnahmen während der Fahrt auf den Sitzplätzen gesichert gehalten werden. Derartige Fahrgeschäfte können beispielsweise eine Achterbahn, ein Wasserfahrgeschäft, ein Karussell oder eine Schaukel sein, die alle gemeinsam haben, dass das Fahrzeug nach einer Fahrt zum Ein- oder Aussteigen der Fahrgäste an einer vorgegebenen Position zum Stillstand kommt.

Fahrgeschäfte werden laufend weiterentwickelt, wobei die Entwicklung in den letzten Jahren insbesondere dahingehend weiterverfolgt wurde, durch höhere Geschwindigkeiten und größere Beschleunigungen spektakuläre Fahrfiguren zu durchfahren, wobei sowohl auf die Fahrzeuge als auch auf eine Führungsbahn, die den Verlauf entlang der vorgegebenen Bahn vorgibt, große Kräfte wirken. Um dauerhaft die Sicherheit der Fahrgäste zu gewährleisten, weisen moderne Fahrzeuge von Fahrgeschäften eine komplexe Überwachungstechnik mit einer Vielzahl von Sensoren auf, die eingerichtet sind, durch eine geeignete Sensorik mechanische Belastungen und Verschleiß an den Fahrzeugen zu erfassen, um den Betreiber des Fahrgeschäfts rechtzeitig vor dem Erreichen kritischer Belastungen auf die notwendigen Wartungs- und Reparaturtätigkeiten hinzuweisen.

Aus dem Stand der Technik ist die Verwendung einer Vielzahl von Sensoren an den Fahrzeugen von Fahrgeschäften bekannt. Beispielsweise ist aus der WO95/27543 A1 ein Fahrgeschäft mit wenigstens einem entlang einer vorgegebenen Bahn beweglichen Fahrzeug vorbekannt, das wenigstens einen Sensor umfasst.

Es hat sich allerdings als nachteilig erwiesen, dass die Sensoren zur Datenerfassung einen hohen Aufwand erfordern, insbesondere bei der Instrumentierung der Hardware an den Fahrzeugen. Die Sensoren des Fahrzeuges werden mittels einer von dem Fahrzeug mitgeführten und integrierten Energieversorgung bestromt. Eine zentrale Verkabelung ist weiterhin vorgesehen, durch die die Sensoren einerseits mit elektrischer Energie versorgt sind und andererseits durch die die Daten zu einer zentralen Datenerfassung übertragen werden. Die Energieversorgung erfolgt oftmals über elektrische Speichermedien, beispielsweise Batterien oder wieder aufladbare Batterien, welche im Stillstand des Fahrzeuges, beispielsweise in den nächtlichen Ruhezeiten wieder aufgeladen werden. Weiterhin hat es sich nachteilig erwiesen, dass neben der aufwändigen Installation von Hardware derartige Sensorik und Datenerfassung das Gesamtsystem unnötig schwer machen, wodurch zur Realisierung von großen Beschleunigungen größere Kräfte benötigt werden.

Hier setzt die vorliegende Erfindung an.

Es ist die Aufgabe der vorliegenden Erfindung, ein Fahrgeschäft vorzuschlagen, das in zweckmäßiger Weise die aus dem Stand der Technik bekannten Fahrgeschäfte mit Sensoren verbessert, wobei einerseits der Aufwand der Hardwareinstallation bzw. Instrumentierung der Sensoren und Datenerfassung reduziert werden soll und andererseits das Gewicht an einem Fahrzeug reduziert werden soll, um mit gleichen oder geringeren Kräften große Beschleunigungen in dem Fahrgeschäft realisieren zu können.

Diese Aufgaben werden durch ein Fahrgeschäft mit den Merkmalen des Patentanspruchs 1, durch die Verwendung wenigstens eines Sensors in einem Fahrgeschäft mit den Merkmalen des Patentanspruchs 13 sowie ein Verfahren zum Betreiben eines Fahrgeschäfts mit den Merkmalen des Patentanspruchs 14 gelöst.

Weitere vorteilhafte Ausgestaltungen der Erfindung werden in den Unteransprüchen angegeben.

Das erfindungsgemäße Fahrgeschäft mit den Merkmalen des Patentanspruchs 1 umfasst wenigstens ein entlang einer vorgegebenen Bahn bewegliches Fahrzeug. Das wenigstens eine Fahrzeug umfasst weiterhin wenigstens einen Sensor, wobei der wenigstens eine Sensor von dem Fahrzeug elektrisch autark ist. Im Zusammenhang mit dieser Erfindung kann unter elektrisch autark eine vollständige elektrische Entkopplung des wenigstens einen Sensors von dem Fahrzeug verstanden werden. Der wenigstens eine Sensor ist weder von einer elektrischen Energieversorgung von dem jeweiligen Fahrzeug abhängig, noch mit einer in dem Fahrzeug angeordneten zentralen Datenverarbeitung gekoppelt, durch welche die erfassten Signale verarbeitet, gespeichert, ausgewertet oder weitergleitet werden. Weiterhin ist erfindungsgemäß vorgesehen, dass der wenigstens eine Sensor einen Transponder, insbesondere einen RFID-Transponder umfasst, und dass entlang der vorgegebenen Bahn mindestens ein Receiver, insbesondere ein RFID-Receiver bzw. RFID-Empfänger angeordnet ist, der eingerichtet ist, mit dem RFID-Transponder des wenigstens einen Sensors zu kommunizieren und mindestens einen Messwert aus dem wenigstens einen Sensor auszulesen. Der jeweilige Sensor kann eine Sensorik umfassen, die eingerichtet ist, mindestens eine physikalische Messgröße zu erfassen. Der mindestens eine Receiver kann entweder einseitig die Daten aus dem Transponder auslesen oder alternativ ebenfalls dem Transponder Daten übermitteln. Im Zusammenhang mit dieser Erfindung können ein Transponder und ein Receiver auf einer beliebigen Frequenz miteinander kommunizieren, wobei sich hierfür verschiedene ISM-Frequenzbänder bewährt haben und europaweit sowie international für die Verwendung der kabellosen Datenübertragung freigegeben sind. Die unterschiedlichen Wellenlängen sind für verschiedene Übertragungsraten und Übertragungsentfernungen geeignet, wobei beispielsweise die Langwellen mit einem Frequenzbereich zwischen 30 und 500 kHz für große Funkreichweiten bei einer niedrigen Datenrate geeignet sind, währenddessen Kurzwellen, oder insbesondere Mikrowellen nur für kurze Übertragungsentfernungen geeignet sind, jedoch das Übertragen von großen Datenraten insbesondere in kurzer Zeit ermöglichen. Daher ist es besonders bevorzugt, wenn der Transponder und der Receiver hohe Frequenzen (HF) oder sehr hohe Frequenzen (UHF) und insbesondere Mikrowellen von bis zu 6 GHz nutzt, wodurch auch bei sehr schnellen Vorbeifahrten des Fahrzeugs an dem wenigstens einen Receiver eine ausreichend Datenübertragung zwischen dem Transponder und dem Receiver stattfinden kann.

Der wenigstens eine RFID-Receiver ist benachbart zu der für das wenigstens eine Fahrzeug vorgegebenen Bahn angeordnet, so dass bei einer Vorbeifahrt des wenigstens einen Fahrzeugs an dem mindestens einen RFID-Receiver der Sensor und der dazugehörige RFID-Transponder sich innerhalb eines Datenübertragungsbereiches bzw. innerhalb der maximalen Funkreichweite des RFID-Receivers bzw. des RFID-Transponders befinden. Bei dem Vorbeifahren des wenigstens einen Fahrzeugs an dem mindestens einen Receiver sendet der Receiver ein Abfragesignal an den Transponder. Durch das Abfragesignal wird eine Spule des Transponders als Empfangsantenne durch Induktion aufgeladen und die induzierte Spannung ermöglicht das Durchführen wenigstens einer Messung und das Erfassen wenigstens eines Messwertes. Anschließend sendet der Transponder eine Antwort des Abfragesignals an den Receiver.

Gemäß einer weiteren Ausgestaltung der vorliegenden Erfindung ist es vorteilhaft, wenn der wenigstens eine Sensor ein digitaler oder ein analoger Sensor ist. Insbesondere ist es bevorzugt, wenn der wenigstens eine Sensor einen oder mehrere A/D-Wandler fast, die eingerichtet sind, analoge Signale der Sensorik in ein digitales Signal zu wandeln. Weiterhin ist es bevorzugt, wenn der wenigstens eine Sensor keine eigene Spannungsquelle, insbesondere keine eigene Batterie, Akku oder dergleichen umfasst und vollständig durch den Transponder, insbesondere den RFID-Transponder mit Energie versorgt wird.

Weiterhin ist es besonders vorteilhaft, wenn der wenigstens eine Sensor ein mechanisches Sekundärsystem überwacht. Ein solches Sekundärsystem kann beispielsweise das Sicherungssystem, ein Haltebügel oder ein Gurt für den wenigstens einen Fahrgast auf dem wenigstens einen Sitz sein. Das Sicherungssystem, der Haltebügel oder der Gurt halten den Fahrgast während der Fahrt mit dem Fahrgeschäft gesichert in dem Sitz. Der wenigstens einen Sensor kann eine ordnungsgemäße Sicherung erfassen. Weiterhin kann der wenigstens eine Sensor eine Kupplung zwischen zwei benachbarten Fahrzeugen, oder ein sonstiges mechanisches System an dem Fahrzeug überwachen. Auch kann der wenigstens eine Sensor ein mechanisches Sekundärsystem zur Erhöhung der Sicherheit eines Fahrgeschäftes, wie aus der DE 10 2014 114 338 A1 bekannt ist, überwachen. Der wenigstens eine mechanische Sensor kann beispielsweise die Übernahme einer mechanischen Last durch ein redundantes Bauteil erfassen oder das Nachlassen der Tragfähigkeit eines primären Bauteils erfassen.

Eine weitere vorteilhafte Ausgestaltung der vorliegenden Erfindung sieht vor, dass der wenigstens eine Sensor eine Fahrgasterkennung umfasst. Durch die Fahrgasterkennung kann die Kapazität des wenigstens eines Fahrzeugs bestimmt werden.

Darüber hinaus ist es vorteilhaft, wenn der wenigstens eine Sensor ein Fahrgastgewicht eines Fahrgastes auf einem Platz oder Sitz in dem wenigstens einen Fahrzeug erfasst. Weiterhin ist es vorteilhaft, wenn das Fahrgastgewicht über einen analogen Widerstandsensor gemessen ist, welcher sich einerseits dadurch auszeichnet, dass dieser besonders kostengünstig und darüber hinaus robust ist.

Weiterhin hat es sich als vorteilhaft erwiesen, wenn der wenigstens eine Sensor eine Radabnutzung wenigstens eines Rades des wenigstens eines Fahrzeuges erfasst. Derartige Sensoren sind besonders kostengünstig und robust und können entweder direkt an dem Rad oder benachbart zu dem Rad angeordnet werden, ohne dass eine aufwändige Verkabelung mit einer zentralen Datenerfassung benötigt wird. Insbesondere kann bei der Verwendung der Sensoren auf die aufwändige Installation von Schleifringen oder dergleichen verzichtet werden, um elektrische Signale von einem rotierenden Bauteil oder System auf ein stillstehendes Bauteil zu übertragen.

Eine weitere vorteilhaften Ausgestaltung der vorliegenden Erfindung sieht vor, dass der wenigstens eine Sensor eine Lagertemperatur wenigstens eines Lagers des wenigstens eines Fahrzeugs erfasst. Der wenigste eine Sensor kann beispielsweise ein Widerstandsthermometer oder ein Thermoelement umfassen.

Darüber hinaus kann es vorteilhaft sein, wenn der wenigstens eine Sensor als Trackingsensor verwendet wird und keinen Messwert erfasst. Der mindestens eine RFID-Receiver kann den wenigstens einen Trackingsensor orten bzw. lokalisieren bzw. tracken, wodurch die Lage des wenigstens einen überwachten Bauteils des Fahrzeugs erfasst werden kann. Beispielsweise kann mittels des Trackingsensors die Lage eines Sicherheitsbügels oder eines Gurtes erfasst werden.

Auch kann der RFID-Transponder ein aktiver, semi-passiver oder ein semi-aktiver Transponder sein. Während aktive RFID-Transponder die induzierte Spannung sowohl für die energetische Versorgung des Mikrochips als auch für das Erzeugen eines monierten Rücksignals verwenden, weisen semi-passive oder semiaktive Transponder keinen eigenen Sender auf, sondern moderieren die Rückstreuung, wodurch diese deutlich energiesparsamer sind.

Nach Maßgabe einer weiteren vorteilhaften Ausgestaltung der vorliegenden Erfindung ist es vorgesehen, dass der wenigstens eine Sensor und/oder der RFID-Transponder einen Stromspeicher aufweisen bzw. aufweist. Insbesondere ist es bevorzugt, wenn die durch ein Abfragesignal des mindestens einen RFID-Receivers induzierte Spannung ausreichend groß ist, um einen Stromspeicher zu laden. Durch den Stromspeicher können eine Mehrzahl von Messungen durchgeführt werden. Bevorzugt umfasst der Stromspeicher mindestens eine Kondensatorschaltung, die bei einer Vorbeifahrt des wenigstens einen Fahrzeugs an dem Receiver durch das Abfragesignal aufgeladen wird. Es ist vorteilhaft, wenn die induzierte Spannung den Stromspeicher so weit auflädt, dass der jeweilige Sensor auch außerhalb der Funkreichweite des RFID-Transponders so lange bestromt wird, bis das Fahrzeug entlang des vorgegebenen Weges erneut an einem RFID-Receiver vorbeifährt.

Eine weitere bevorzugte Ausgestaltung der vorliegenden Erfindung sieht vor, dass der wenigstens eine Sensor und/oder der RFID-Transponder einen Datenspeicher aufweisen bzw. aufweist. Der Datenspeicher kann durch den Stromspeicher auch außerhalb der Funkreichweite des RFID-Receivers bestromt werden und es können ein oder mehrere Messwerte auf dem Datenspeicher abgelegt werden. Auf ein Abfragesignal des mindestens einen RFID-Receivers kann der RFID-Transponder die auf dem Datenspeicher hinterlegten Messwerte an den RFID-Receiver übermitteln.

Gemäß einer weiteren vorteilhaften Ausgestaltung der vorliegenden Erfindung ist es vorgesehen, dass das Fahrgeschäft ein Rundfahrgeschäft mit einer geschlossenen Bahn ist. Ein solches Rundfahrgeschäft ist bevorzugt eine Achterbahn oder eine Wasserachterbahn, aber auch ein drehendes Karussell und dergleichen. Weiterhin ist es vorteilhaft, wenn das Fahrgeschäft ein Pendelfahrgeschäft ist, wobei das wenigstens eine Fahrzeug auf der Bahn abwechselnd in unterschiedliche Richtungen die Bahn abfährt. Ein solches Pendelfahrgeschäft kann eine Bahn mit einem ersten Ende und einem zweiten Ende aufweisen, wobei das wenigstens eine Fahrzeug zwischen den beiden Enden hin- und herfährt. Ein solches Pendelfahrgeschäft kann beispielsweise der sogenannter "PowerSplash" sein. Auch kann ein solches Fahrgeschäft eine Schaukel oder dergleichen sein.

Ein weiterer Aspekt der vorliegenden Erfindung betrifft die Verwendung eines Sensors in einem Fahrgeschäft bzw. an einem Fahrzeug eines Fahrgeschäfts. Der Sensor umfasst mindestens einen RFID-Transponder und wenigstens eine Sensorik, die eingerichtet ist, wenigstens einen physikalischen Messwert zu erfassen und den wenigstens einen physikalischen Messwert für den RFID-Transponder zum Übertragen an einen RFID-Receiver bereitzustellen.

Ein weiterer Aspekt der vorliegenden Erfindung betrifft ein Verfahren zum Betreiben eines Fahrgeschäfts, wobei erfindungsgemäß vorgesehen ist, dass wenigstens ein Abfragesignal durch den mindestens einen RFID-Receiver bei einer Vorbeifahrt des wenigstens einen Fahrzeugs an dem wenigstens einen RFID-Receiver gesendet wird. Der jeweilige RFID-Transponder empfängt das wenigstens eine Abfragesignal und wenigstens ein Messwert wird durch den wenigstens einen Sensor erfasst. Anschließend wird der wenigstens eine Messwert durch den RFID-Transponder des wenigstens einen Sensors zu dem wenigstens einen RFID-Receiver übertragen, und wenigstens ein Zustand des wenigstens einen Fahrzeugs wird anhand des wenigstens einen Messwertes bestimmt. Bei der Vorbeifahrt des wenigstens einen Fahrzeugs an dem wenigstens einen RFID-Receiver befindet sich der RFID-Transponder des wenigstens einen Sensors innerhalb der Funkreichweite und der RFID-Receiver und der RFID-Transponder können miteinander kommunizieren.

Weiterhin ist es vorteilhaft, wenn bei der Vorbeifahrt des wenigstens einen Fahrzeugs an dem RFID-Receiver das Abfragesignal in dem RFID-Transponder einen Strom induziert und der wenigstens eine Sensor durch den induzierten Strom bestromt wird und den wenigstens einen Messwert erfasst. Der wenigstens eine Sensor kann somit elektrisch autark von dem wenigstens einen Fahrzeug an dem wenigstens einen Fahrzeug angeordnet werden, wodurch einerseits keine elektrische Ankopplung des wenigstens einen Sensors an das Fahrzeug notwendig ist und andererseits auch bestehende Fahrzeuge mit entsprechenden Sensoren nachgerüstet werden können.

Der wenigstens eine Zustand kann beispielsweise die Kapazität des Fahrzeugs des Fahrgeschäfts angeben, oder das Gewicht der Fahrgäste, um beispielsweise das wenigstens eine Fahrzeug mit einer vorgegebenen Kraft auf eine vorgegebene Geschwindigkeit zu beschleunigen. Auch kann der wenigstens eine Zustand den mechanischen Zustand des wenigstens einen Fahrzeugs beschreiben, um Verschleiß, Abnutzung oder dergleichen zu erfassen.

Weiterhin ist es besonders vorteilhaft, wenn bei der Vorbeifahrt an dem mindestens einen RFID-Receiver ein Stromspeicher des wenigstens einen Sensors durch das Abfragesignal des mindestens einen RFID-Receivers geladen wird. Der Stromspeicher umfasst bevorzugt wenigstens eine Kondensatorschaltung, die eingerichtet ist, einen in dem RFID-Transponder induzierten Strom zu speichern und bei Bedarf abzugeben. Durch den in dem Stromspeicher gespeicherten Strom kann der jeweilige Sensor auch außerhalb der Übertragungsentfernung bestromt werden.

Insbesondere ist es bevorzugt, wenn der Stromspeicher des wenigstens einen Sensors den Sensor zwischen zwei Vorbeifahrten des wenigstens einen Fahrzeugs an dem mindestens einen RFID-Receiver bestromt, wodurch auch außerhalb der Funkreichweite der wenigstens eine Sensor mit seiner Sensorik Messwerte erfassen kann.

Gemäß einer weiteren vorteilhaften Ausgestaltung der vorliegenden Erfindung ist es vorteilhaft, wenn bei der Durchführung des erfindungsgemäßen Verfahrens der wenigstens eine Sensor zwischen den zwei Vorbeifahrten mindestens einen Messwert erfasst und den mindestens einen Messwert auf einen Datenspeicher schreibt. Weiterhin ist es bevorzugt, dass bei einer Vorbeifahrt an dem mindestens einen RFID-Receiver der mindestens eine auf dem Datenspeicher gespeicherte Messwert von dem RFID-Transponder des jeweiligen Sensors an den RFID-Receiver übertragen wird. Durch die Speicherung der elektrischen Energie können bevorzugt auch außerhalb der Funkreichweite des RFID-Receivers und des RFID-Transponders Messwerte durch den wenigstens einen Sensor erfasst werden, und auf einem Datenspeicher abgelegt werden. Sobald das Fahrzeug mit dem wenigstens einen Sensor wieder bei dem mindestens einen RFID-Receiver vorbeifährt und sich innerhalb der Funkreichweite des mindestens einen RFID-Receivers befindet, können die Messwerte auf ein Abfragesignal hin übertragen werden und der Stromspeicher erneut aufgeladen werden.

Nachfolgend wird unter Bezugnahme auf die begleitende Zeichnung ein erfindungsgemäßes Ausführungsbeispiel im Detail erläutert.

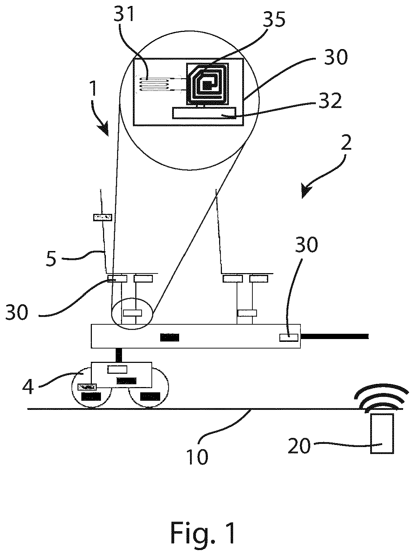

Figur 1 zeigt ein stark vereinfachtes Fahrzeug 2 eines Fahrgeschäfts 1, welches eingerichtet ist, auf einer vorgegebenen Bahn 10 des Fahrgeschäfts 1 zu fahren. Das Fahrgeschäft 1 kann beispielsweise eine Achterbahn oder ein Wasserfahrgeschäft, beispielsweise ein sogenannter "PowerSplash", sein, wobei die Bahn 10 aus einer oder mehreren Führungsschienen gebildet sein kann, durch die das Fahrzeug 2 mittels mehrerer Räder 4 entlang der vorgegebenen Bahn 10 geführt ist. Das Fahrzeug 2 umfasst darüber hinaus mehrere Sitze 5, auf denen bestimmungsgemäß (nicht dargestellte) Fahrgäste für eine Fahrt mit dem Fahrgeschäft 1 platznehmen können.

Entlang der vorgegebenen Bahn 10 ist wenigstens ein RFID-Receiver 20 angeordnet, wobei entlang der Bahn 10 auch eine Vielzahl von RFID-Receivern 20 angeordnet sein können. Der jeweilige RFID-Receiver 20 ist benachbart zu der Bahn 10 angeordnet, so dass das auf der Bahn 10 vorbeifahrende Fahrzeug 2 sich innerhalb der Funkweite des RFID-Receivers 20 befindet.

Die RFID-Receiver 20 können beispielsweise derart angeordnet sein, dass näherungsweise die Fahrzeit des Fahrzeugs 2 zwischen zwei benachbarten RFID-Receivern 20 gleich lang ist. Alternativ können die RFID-Receiver 20 an Abschnitten oder Fahrfiguren der Bahn 10 angeordnet sein, in denen es zu erhöhten Belastungen an dem Fahrzeug 2 aufgrund von Beschleunigungen kommt.

Das Fahrzeug 2 umfasst eine Vielzahl von Sensoren 30, die jeweils mindestens einen RFID-Transponder 35 und mindestens eine Sensorik 31 umfassen können. Der jeweilige Sensor 30 ist von dem Fahrzeug 2 elektrisch autark, also von dem Fahrzeug vollständig elektrisch entkoppelt. In Figur 1 sind die Sensoren 30 durch Quadrate exemplarisch angedeutet, wobei aus Gründen der Übersichtlichkeit nicht jeder Sensor 30 mit einer Bezugsziffer gekennzeichnet ist.

Die Sensorik 31 ist eingerichtet, wenigstens eine physikalische Größe zu messen. Weiterhin kann der jeweilige Sensor 30 einen Datenspeicher 32 und einen (nicht dargestellten) Stromspeicher 34 umfassen, der beispielsweise wenigstens eine Kondensatorschaltung umfasst. Der RFID-Transponder 35 ist eingerichtet, mit dem RFID-Receiver 20 innerhalb einer Funkreichweite zu kommunizieren, welche typischerweise im Bereich von wenigen Metern bis wenigen Zentimeter liegt.

Bei einer Vorbeifahrt des Fahrzeugs 2 an dem wenigstens einen RFID-Receiver 20 fährt das Fahrzeug 2 in die Funkreichweite des RFID-Receivers 20 und der RFID-Receiver 20 sendet ein oder mehrere Abfragesignale und induziert eine Spannung in dem jeweiligen RFID-Transponder 35 des jeweiligen Sensors 30. Die Spannung kann beispielsweise die Kondensatorschaltung aufladen und zum Durchführen einer Messung mit dem Sensor 30 bzw. dessen Sensorik 31 verwendet werden. Anschließend kann der RFID-Transponder 35 eine Antwort des Abfragesignals an den RFID-Receiver 20 senden.

Der jeweilige Sensor 30 kann ein digitaler oder analoger Sensor sein und die Sensorik 31 kann eine Vielzahl von unterschiedlichen Messtechniken umfassen, die ausgebildet sind, einen physikalischen Zustand des wenigstens einen Fahrzeugs 2 zu beschreiben. Beispielsweise kann die Sensorik 31 ein Thermoelement, ein Widerstandsthermometer, einen Dehnmessstreifen (wie schematisch dargestellt), einen Messkontakt usw. umfassen.

Der Sensor 30 kann beispielsweise durch seine Sensorik 31 geeignet sein, eine Abnutzung eines der Räder 4 des Fahrzeugs 2 zu bestimmen oder zu erfassen, einen Fahrgast auf dem Sitz 5 zu erkennen oder Sekundärsysteme zu überwachen. Auch kann der Sensor 30 zum Bauteiltracking verwendet werden.

Darüber hinaus kann ein Sensor 30 geeignet sein, das Fahrgastgewicht auf einem Sitz 5 auf dem Fahrzeug 2 zu erfassen. Hierfür können an dem Sitz 5 ein oder mehrere Widerstandsensoren angeordnet sein, durch die das Gewicht des Fahrgastes bestimmt werden kann. Auch können eine Vielzahl von Sensoren 30 an dem Fahrzeug 2 angeordnet sein, die beispielsweise das Schraubendrehmoment von Schrauben erfassen, wodurch sichergestellt ist, dass sicherheitsrelevante Schraubverbindungen stets ordnungsgemäß angezogen sind.

Weiterhin können an den Achsen der Räder 4 bzw. an den Lagern der Achsen der Räder 4 Sensoren 30 angeordnet sein, durch die die Lagertemperatur erfasst werden kann. Besonders vorteilhaft ist es bei der Verwendung der Sensoren 30, dass weder eine Verkabelung in dem Fahrzeug 2 vorgenommen werden muss, und somit komplizierte Übertragungswege, beispielsweise mittels Schleifringen oder dergleichen überflüssig sind.

Der jeweilige Sensor 30 kann einen Speicher 32 umfassen. Auf dem Speicher 32 können ein oder mehrere Messwerte abgelegt bzw. zwischengespeichert werden, welche durch den RFID-Transponder 35 auf ein Abfragesignal hin an den RFID-Receiver 20 übermittelt werden.

Der Stromspeicher 34 kann auf ein Abfragesignal hin des RFID-Receivers 20 aufgeladen werden und außerhalb der Funkreichweite des RFID-Receivers 20 den Sensor 30 bestromen, wodurch auch außerhalb der Funkreichweite Messwerte erfasst werden können, die auf dem Speicher 32 zwischengespeichert werden können.

### Bezugszeichenliste

- 1: Fahrgeschäft
- 2: Fahrzeug
- 4: Räder
- 5: Sitz
- 10: Bahn
- 20: Receiver
- 30: Sensor
- 32: Speicher
- 35: Transponder

## Patentansprüche

1. Fahrgeschäft (1) umfassend:
- wenigstens ein entlang einer vorgegebenen Bahn (10) bewegliches Fahrzeug (2),
- wobei das wenigstens eine Fahrzeug (2) wenigstens einen Sensor (30) umfasst,
- wobei der wenigstens eine Sensor (30) von dem Fahrzeug (2) elektrisch autark ist,
- wobei der wenigstens eine Sensor (30) einen RFID-Transponder (35) umfasst,
- wobei entlang der vorgegebenen Bahn (10) mindestens ein RFID-Receiver (20) angeordnet ist, der eingerichtet ist, beim Vorbeifahren des wenigstens einen Fahrzeugs (2) an dem mindestens einen RFID-Receiver (20) ein Abfragesignal an den dem RFID-Transponder (35) zu senden und mindestens einen Messwert aus dem wenigstens einen Sensor (30) auszulesen, wobei der RIFD-Transponder (35) eine Antwort des Abfragesignals an den RFID-Receiver (20) sendet.

2. Fahrgeschäft (1) nach Anspruch 1,
**dadurch gekennzeichnet, dass**
der wenigstens eine Sensor (30) ein digitaler Sensor oder ein analoger Sensor ist.

3. Fahrgeschäft (1) nach Anspruch 1 oder 2,
**dadurch gekennzeichnet, dass**
der wenigstens eine Sensor (30) ein mechanisches Sekundärsystem überwacht.

4. Fahrgeschäft (1) nach einem der vorgenannten Ansprüche,
**dadurch gekennzeichnet, dass**
der wenigstens eine Sensor (30) eine Fahrgasterkennung umfasst.

5. Fahrgeschäft (1) nach einem der vorgenannten Ansprüche,
**dadurch gekennzeichnet, dass**
der wenigstens eine Sensor (30) ein Fahrgastgewicht eines Fahrgastes auf einem Platz (5) in dem wenigstens einen Fahrzeug (2) erfasst.

6. Fahrgeschäft (1) nach einem der vorgenannten Ansprüche,
**dadurch gekennzeichnet, dass**
der wenigstens eine Sensor (30) eine Radabnutzung wenigstens eines Rades (4) des wenigstens einen Fahrzeugs (2) erfasst.

7. Fahrgeschäft (1) nach einem der vorgenannten Ansprüche,
**dadurch gekennzeichnet, dass**
der wenigstens eine Sensor (30) eine Lagertemperatur wenigstens eines Lagers des wenigstens einen Fahrzeugs (2) erfasst.

8. Fahrgeschäft (1) nach einem der vorgenannten Ansprüche,
**dadurch gekennzeichnet, dass**
der wenigstens eine Sensor (30) ein Trackingsensor ist und dass der mindestens eine RFID-Receiver (20) wenigstens ein Bauteil des wenigstens einen Fahrzeugs (2) lokalisiert bzw. trackt.

9. Fahrgeschäft (1) nach einem der vorgenannten Ansprüche,
**dadurch gekennzeichnet, dass**
der RFID-Transponder (30) ein passiver, semi-passiver oder semi-aktiver RFID-Transponder (30) ist.

10. Fahrgeschäft (1) nach einem der vorgenannten Ansprüche,
**dadurch gekennzeichnet, dass**
der Sensor (30) und/oder der RFID-Transponder (35) einen Datenspeicher (32) aufweist.

11. Fahrgeschäft (1) nach einem der vorgenannten Ansprüche,
**dadurch gekennzeichnet, dass**
der wenigstens eine Sensor (30) einen Stromspeicher (34) aufweist.

12. Fahrgeschäft (1) nach einem der vorgenannten Ansprüche,
**dadurch gekennzeichnet, dass**
das Fahrgeschäft (1) ein Rundfahrgeschäft mit einer im Kreis geschlossenen Bahn (10) ist, oder dass das Fahrgeschäft (1) ein Pendelfahrgeschäft ist, wobei das wenigstens eine Fahrzeug auf der Bahn (10) abwechselnd hin- und herfährt.

13. Verwendung eines Sensors (30) in einem Fahrgeschäft (1) nach einem der Ansprüche 1 bis 12.

14. Verfahren zum Betreiben eines Fahrgeschäfts (1) nach einem der Ansprüche 1 bis 12 aufweisend folgende Verfahrensschritte:
- Senden wenigstens eines Abfragesignals durch den mindestens einen RFID-Receiver (20) bei einer Vorbeifahrt des wenigstens einen Fahrzeugs (2) an dem mindestens einen RFID-Receiver (20),
- Erfassen mindestens eines Messwertes durch den wenigstens einen Sensor (30),
- Übertragen mindestens eines Messwertes durch den RFID-Transponder (35) zu dem RFID-Receiver (20), und
- Bestimmen wenigstens eines Zustands des wenigsten ein Fahrzeugs (2) anhand des mindestens eines Messwertes.

15. Verfahren nach Anspruch 14,
**dadurch gekennzeichnet, dass**
bei der Vorbeifahrt an dem mindestens eine RFID-Receiver (20) ein Stromspeicher (34) des wenigstens einen Sensors (30) geladen ist.

16. Verfahren nach Anspruch 15,
**dadurch gekennzeichnet, dass**
zwischen zwei Vorbeifahrten an dem mindestens einen RFID-Receiver (20) der Stromspeicher (34) des wenigstens einen Sensors (30) den wenigstens einen Sensor (30) bestromt.

17. Verfahren nach einem der Ansprüche 14 bis 16,
**dadurch gekennzeichnet, dass**
der wenigstens eine Sensor (30) zwischen den zwei Vorbeifahrten mindestens einen Messwert auf einen Datenspeicher (32) schreibt.

## Claims

1. Amusement ride (1) comprising:
- at least one vehicle (2), which is moveable along a specified track (10),
- wherein the at least one vehicle (2) comprises at least one sensor (30),
- wherein the at least one sensor (30) is electrically independent of the vehicle (2),
- wherein the at least one sensor (30) comprises an RFID transponder (35),
- wherein, along the specified track (30), at least one RFID receiver is arranged which is configured to send, when the at least one vehicle (2) passes by the at least one RFID receiver (20), an interrogation signal to the RFID transponder (35) and to retrieve at least one measured value from the at least one sensor (30), wherein the RFID transponder (35) sends a response to the interrogation signal to the RFID receiver (20).

2. Amusement ride (1) in accordance with claim 1,
**characterized in that**
the at least one sensor (30) is a digital sensor or an analog sensor.

3. Amusement ride (1) in accordance with claim 1 or 2,
**characterized in that**
the at least one sensor (30) monitors a mechanical secondary system.

4. Amusement ride (1) in accordance with any of the preceding claims
**characterized in that**
the at least one sensor (30) comprises a passenger detection.

5. Amusement ride (1) in accordance with any of the preceding claims
**characterized in that**
the at least one sensor (30) detects a passenger weight of a passenger on a seat (5) in the at least one vehicle (2).

6. Amusement ride (1) in accordance with any of the preceding claims
**characterized in that**
the at least one sensor (30) detects a wheel wear of at least one wheel (4) of the at least one vehicle (2).

7. Amusement ride (1) in accordance with any of the preceding claims
**characterized in that**
the at least one sensor (30) detects a bearing temperature of at least one bearing of the at least one vehicle (2).

8. Amusement ride (1) in accordance with any of the preceding claims
**characterized in that**
the at least one sensor (30) is a tracking sensor, and **in that** the at least one RFID receiver (20) locates and tracks at least one component of the at least one vehicle (2).

9. Amusement ride (1) in accordance with any of the preceding claims
**characterized in that**
the RFID transponder (35) is a passive, a semi-passive or a semi-active RFID transponder (35).

10. Amusement ride (1) in accordance with any of the preceding claims
**characterized in that**
the sensor (30) and/or the RFID transponder (35) comprise(s) a data storage (32).

11. Amusement ride (1) in accordance with any of the preceding claims
**characterized in that**
the at least one sensor (30) comprises a power storage (34).

12. Amusement ride (1) in accordance with any of the preceding claims
**characterized in that**
the amusement ride (1) is a merry-go-round having a track (10) which is closed to a circle, or **in that** the amusement ride (1) is a shuttle ride, during which the at least one vehicle travels alternately back and forth along the track (10).

13. Use of a sensor (30) in an amusement ride (1) in accordance with any of the claims 1 to 12.

14. Method for operating an amusement ride (1) in accordance with any of claims 1 to 12, comprising the following method steps:
- sending at least one interrogation signal by means of the at least one RFID receiver (20) when the at least one vehicle (2) passes by the at least one RFID receiver (20),
- detecting at least one measured value by means of the at least one sensor (30),
- transmitting at least one measured value by means of the RFID transponder (35) to the RFID receiver (20), and
- determining at least one state of the at least one vehicle (2) based on the at least one measured value.

15. Method in accordance with claim 14,
**characterized in that**
when passing by the at least one RFID receiver (20) a power storage (34) of the at least one sensor (30) is charged.

16. Method in accordance with claim 15,
**characterized in that**,
between two pass-bys past the at least one RFID receiver (20), the power storage (34) of the at least one sensor (30) provides the at least one sensor (30) with electricity.

17. Method in accordance with any of claims 14 to 16,
**characterized in that**,
between the two pass-bys, the at least one sensor (30) records at least one measured value in a data storage (32).

## Revendications

1. Manège (1) comprenant :
- au moins un véhicule (2) se déplaçant le long d'un trajet prédéfini (10),
- ce véhicule (2) comporte au moins un capteur (30),
- le capteur (30) du véhicule (2) est électriquement autonome,
- le capteur (30) comprend un transpondeur RFID (35),
- au moins un récepteur RFID (20) est installé sur le trajet prédéfini (10), pour qu'au passage du véhicule (2) il envoie à au moins un récepteur RFID (20) un signal de requête au transpondeur RFID (35) et il prend au moins une valeur de mesure d'au moins un capteur (30), le transpondeur RFID (35) envoyant une réponse du signal de requête au récepteur RFID (20).

2. Manège (1) selon la revendication 1,
**caractérisé en ce que**
au moins le capteur (30) est un capteur numérique ou un capteur analogique.

3. Manège (1) selon la revendication 1 ou 2,
**caractérisé en ce que**
au moins le capteur (30) surveille un système mécanique secondaire.

4. Manège (1) selon l'une des revendications précédentes,
**caractérisé en ce que**
au moins le capteur (30) comprend une reconnaissance de passager.

5. Manège (1) selon l'une des revendications précédentes,
**caractérisé en ce que**
au moins le capteur (30) saisit le poids du passager installé à une place (5) dans le véhicule (2).

6. Manège (1) selon l'une des revendications précédentes,
**caractérisé en ce que**
au moins le capteur (30) saisit l'usure de pneu d'au moins une roue (4) du véhicule (2).

7. Manège (1) selon l'une des revendications précédentes,
**caractérisé en ce que**
au moins le capteur (30) saisit la température d'au moins un palier du véhicule (2).

8. Manège (1) selon l'une des revendications précédentes,
**caractérisé en ce que**
au moins le capteur (30) est un capteur de poursuite et le récepteur RFID (20) localise ou suit au moins un composant du véhicule (2).

9. Manège (1) selon l'une des revendications précédentes,
**caractérisé en ce que**
le transpondeur RFID (30) est un transpondeur RFID (30) passif, semi-passif ou semi-actif.

10. Manège (1) selon l'une des revendications précédentes,
**caractérisé en ce que**
le capteur (30) et/ou le transpondeur RFID (35) ont une mémoire de données (32).

11. Manège (1) selon l'une des revendications précédentes,
**caractérisé en ce que**
au moins le capteur (30) a un accumulateur électrique (34).

12. Manège (1) selon l'une des revendications précédentes,
**caractérisé en ce que**
le manège (1) est un manège tournant avec une trajectoire en boucle (10) ou le manège (1) est un manège pendulaire et le véhicule circule en va-et-vient alterné sur la trajectoire (10).

13. Application d'un capteur (30) dans un manège (1) selon l'une des revendications 1 à 12.

14. Procédé de gestion d'un manège (1) selon l'une des revendications 1 à 12,
comprenant les étapes de procédé suivantes :
- envoyer au moins un signal de requête par au moins un récepteur RFID (20) au passage d'au moins un véhicule (2) devant au moins un récepteur RFID (20),
- saisir au moins une valeur de mesure par au moins un capteur (30),
- transmettre au moins une valeur de mesure par le transpondeur RFID (35) au récepteur RFID (20), et
- déterminer au moins un état d'au moins un véhicule (2) avec la valeur de mesure.

15. Procédé selon la revendication 14,
**caractérisé en ce que**
au passage devant au moins un récepteur RFID (20), un accumulateur électrique (34) du capteur (30) se charge.

16. Procédé selon la revendication 15,
**caractérisé en ce que**
entre deux passages devant un récepteur RFID (20), la batterie électrique (34) du capteur (30) alimente au moins ce capteur (30).

17. Manège (1) selon l'une des revendications 14 à 16,
**caractérisé en ce que**
entre les deux passages au moins un capteur (30) inscrit au moins une valeur de mesure dans une mémoire de données (32).
